Europäisches Patentamt

European Patent Office

Office européen des brevets

(19)

(11) Veröffentlichungsnummer: **0 162 962 B1**

(12)                    **EUROPÄISCHE PATENTSCHRIFT**

(45) Veröffentlichungstag der Patentschrift: **06.03.91**

(51) Int. Cl.5: **H04L 9/00**

(21) Anmeldenummer: **84115586.4**

(22) Anmeldetag: **17.12.84**

(54) **Verfahren und Anordnung zum Überwachen des Synchronlaufs von Schlüsselgeräten.**

(30) Priorität: **29.05.84 DE 3420047**

(43) Veröffentlichungstag der Anmeldung:
**04.12.85 Patentblatt 85/49**

(45) Bekanntmachung des Hinweises auf die
Patenterteilung:
**06.03.91 Patentblatt 91/10**

(84) Benannte Vertragsstaaten:
**BE DE IT NL**

(56) Entgegenhaltungen:
**EP-A- 0 019 756**
**DE-A- 1 499 271**
**DE-A- 1 815 233**
**US-A- 3 872 430**

(73) Patentinhaber: **Siemens Aktiengesellschaft**
**Wittelsbacherplatz 2**
**W-8000 München 2(DE)**

(72) Erfinder: **Hopf, Wolfgang**
**Deichwiese 12**
**W-6432 Heringen 1(DE)**
Erfinder: **Spörer, Gerhard**
**Landwehr 31**
**W-6432 Heringen Kleinensee(DE)**

## Beschreibung

Die Erfindung bezieht sich auf ein Verfahren zum Überwachen des Synchronlaufs von Schlüsselgeräten entsprechend dem Oberbegriff des Patentanspruchs I. Weiterhin bezieht sich die Erfindung auf eine Anordnung zur Durchführung des Verfahrens.

Es ist allgemein bekannt, bei einer Übertragung von Daten von einer sendenden Station zu einer empfangenden Station unter Verwendung von Schlüsselgeräten diese bitgenau zu synchronisieren. Falls der Synchronlauf zwischen den Schlüsselgeräten nicht vorhanden ist, wird die Übertragung unterbrochen und eine neue Synchronisierung durchgeführt. Das Überwachen des Synchronlaufs der Schlüsselgeräte erfordert im allgemeinen einen verhältnismäßig großen Aufwand.

Es ist weiterhin aus der EP-A-I9 756 bekannt nach der Startprozedur und nur dort, einen Zufallstext zur einmaligen Kontrolle der Schlüsselphase einzusetzen, im Unterschied zu fest vereinbarten bzw. festgelegten Kennungen.

Der Erfindung liegt daher die Aufgabe zugrunde, ein Verfahren und eine Anordnung zum Überwachen des Synchronlaufs anzugeben, die einen geringen Aufwand erfordern, und mit denen die Überwachung auf einfache Weise durchführbar ist.

Erfindungsgemäß wird die Aufgabe bei dem Verfahren der eingangs genannten Art durch die im Patentanspruch I angegebenen Merkmale gelöst. Das Verfahren eignet sich insbesondere bei der Verwendung von Mikrocomputern mit zugehörigen Arbeitsspeichern und peripheren Schnittstellenbausteinen in den Schlüsselgeräten. Durch die Überwachung des Synchronlaufs der Schlüsselgeräte kann bei einer Duplexverbindung im Fehlerfall selbsttätig eine neue Einphasung der Schlüsselgeräte ausgelöst werden.

Das Verfahren weist insbesondere dadurch eine große Sicherheit auf, daß neben den Datenwörtern auch das Prüfwort nach dem Auslesen aus dem sendeseitigen Pufferspeicher verschlüsselt wird und vor dem Einlesen in den empfangsseitigen Pufferspeicher entschlüsselt wird.

Das Einspeichern und das Auslesen aus den Pufferspeichern erfolgt zweckmäßigerweise zyklisch, wobei das Auslesen jeweils zeitlich verzögert gegenüber dem Einspeichern erfolgt. Das Einspeichern und das Auslesen können dabei seriell oder parallel erfolgen.

Zur Vermeidung eines Datenstaus auf der Sendeseite und eines Datenverlusts auf der Empfangsseite ist es vorteilhaft, wenn die Taktimpulse, mit denen die Datenwörter von der sendeseitigen Endeinrichtung abgerufen und zur empfangsseitigen Endeinrichtung ausgegeben werden, während jeweils einer Zeitdauer gesperrt werden, die der für eine Übertragung der Prüfwörter erforderlichen Zeitdauer entspricht.

Das Prüfwort bleibt im allgemeinen unverändert, jedoch ist es auch möglich, dieses in vereinbarter Weise jeweils zu verändern.

Eine vorteilhafte Anordnung zur Durchführung des Verfahrens weist sowohl einen sendeseitigen als auch einen empfangsseitigen Pufferspeicher auf, in den die Datenwörter vor ihrer Verschlüssel bzw. nach ihrer Entschlüsselung zyklisch eingespeichert und zeitlich gegenüber dem Einspeichern verzögert ausgelesen werden. Weiterhin weist die Anordnung für jeden Pufferspeicher eine Steuereinheit auf, die die entsprechenden Signale für das Einspeichern und Auslesen der Pufferspeicher erzeugt und die die zu den Endeinrichtungen übertragenen Taktimpulse jeweils für eine Zeitdauer sperren, die jeweils der Dauer für die Übertragung eines Prüfwortes zugeordnet ist. Schließlich weist die Anordnung auf der Empfangsseite eine Vergleichseinrichtung auf, die jeweils das übertragene Prüfwort mit einem vorgegebenen Prüfwort vergleicht und bei Unrichtigkeit eine entsprechende Anzeige veranlaßt.

Im folgenden wird das Verfahren gemäß der Erfindung anhand einer Ausführungsform einer Anordnung zur Durchführung des Verfahrens näher erläutert.

Es zeigen

Fig. 1    ein Blockschaltbild eines Übertragungssystems,

Fig. 2    ein Blockschaltbild der Anordnung,

Fig. 3    Signale an verschiedenen Punkten der Anordnung.

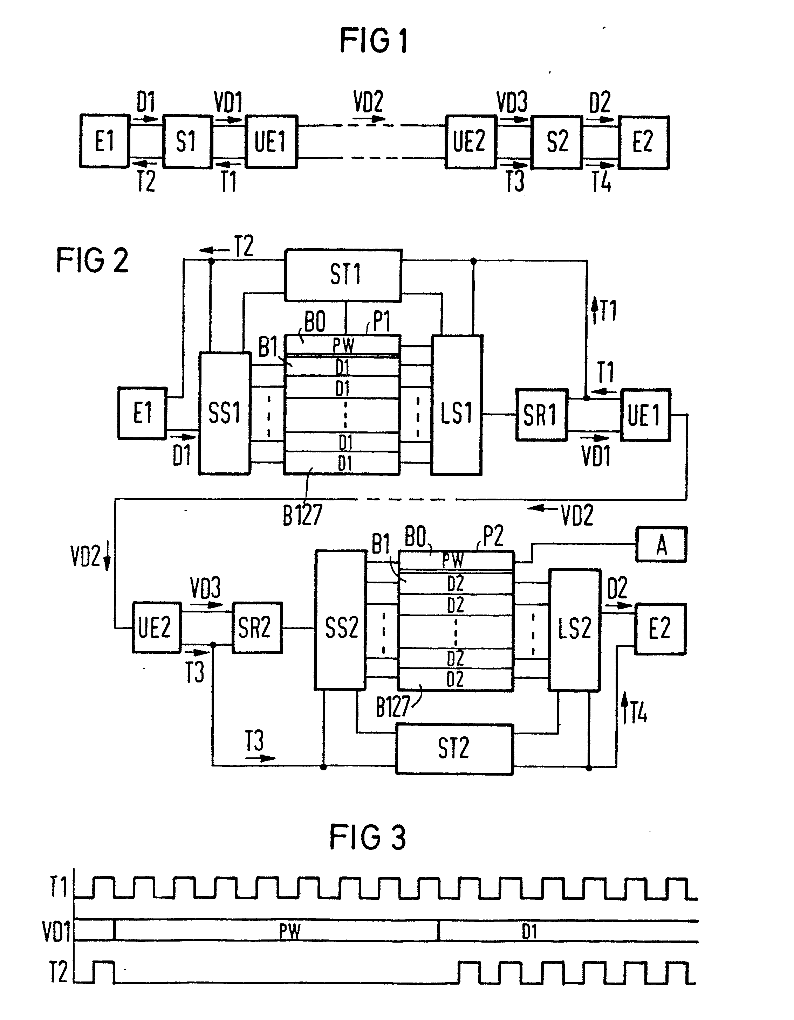

Bei dem in Fig. 1 dargestellten Übertragungssystem werden von einem sendeseitigen Endgerät E1 zu einem empfangsseitigen Endgerät E2 Daten verschlüsselt übertragen. Das Übertragungssystem ist beispielsweise als Duplexverbindung aufgebaut, jedoch ist nur die Übertragung in einer Richtung dargestellt. Die vom Endgerät E1 abgegebenen Daten werden durch Datenwörter D1 codiert und an ein sendeseitiges Schlüsselgerät S1 abgegeben. Dieses verschlüsselt die Datenwörter D1 und erzeugt verschlüsselte Datenwörter VD1, die über eine sendeseitige Übertragungseinheit UE1 als verschlüsselte Datenwörter VD2 zur empfangenden Station übertragen werden. Dort werden sie von einer empfangsseitigen Übertragungseinheit UE2 empfangen und als verschlüsselte Datenwörter VD3 zu einem empfangsseitigen Schlüsselgerät S2 abgegeben. Dieses entschlüsselt die verschlüsselten Datenwörter VD3 und gibt die entschlüsselten Datenwörter D2, die den Datenwörtern D1 entsprechen, an das empfangsseitige Endgerät E2 ab. Die Abgabe der Datenwörter D1 und der verschlüsselten Datenwörter VD1 wird durch von der Übertragungseinheit UE1 abgegebene Taktimpulse T1 gesetuert, die dem Schlüsselgerät S1 zugeführt werden, das seinerseits aus diesen Taktimpulsen T1 Taktimpulse T2 erzeugt, die an das Endgerät E1 abgegeben werden. In entsprechender Weise erzeugt die empfangsseitige Übertragungseinheit UE2 Taktimpulse T3 und gibt diese zusammen mit den verschlüsselten Datenwörtern VD3 an das Schlüsselgerät S2 ab. Dieses erzeugt aus den Taktimpulsen T3, den Datenwörtern D2 zugeordnete Taktimpulse T4 und gibt diese an das Endgerät E2 ab.

Zur Überwachung des Synchronlaufs der Schlüsselgeräte S1 und S2 werden im Schlüsselgerät S1 in zyklischer Reihenfolge in die Datenwörter D1 Prüfwörter eingefügt, die ebenfalls verschlüsselt werden und in den verschlüsselten Datenwörtern VD1 enthalten sind. Auf der Empfangsseite werden im Schlüsselgerät S2 diese Prüfwörter wieder aus den verschlüsselten Datenwörtern VD3 herausgetrennt und auf ihre Richtigkeit überprüft, um damit auf den Synchronlauf der Schlüsselgeräte S1 und S2 schließen zu können. Um auf der Sendeseite während der Übertragung der Prüfwörter einen Stau der Datenwörter D1 zu vermeiden, werden während einer entsprechenden Zeitdauer die Taktimpulse T2 gesperrt. In entsprechender Weise werden zur Vermeidung eines Datenverlustes auf der Empfangsseite während einer dem Abtrennen der Prüfwörter zugeordneten Zeitdauer die Taktimpulse T4 gesperrt.

Weitere Einzelheiten des Verfahrens werden im folgenden zusammen mit dem in Fig. 2 dargestellten Blockschaltbild und mit dem in Fig. 3 dargestellten Zeitdiagramm beschrieben.

Bei dem in Fig. 2 dargestellten Blockschaltbild ist auf der Sendeseite ein Pufferspeicher P1 dargestellt, der in einem vorgegebenen Speicherbereich BO ein Prüfwort PW enthält. Das Prüfwort PW bleibt normalerweise während einer Übertragung unverändert. Es ist jedoch auch möglich, dieses nach einer entsprechenden Vereinbarung gegebenenfalls auch zu verändern. In den übrigen Speicherbereichen B1 bis 8127 des Pufferspeichers P1 werden zyklisch nacheinander die vom Endgerät E1 abgegebenen Datenwörter D1 unter Verwendung einer Schreibsteuerung SS1 eingespeichert. Zeitlich gegenüber dem Einspeichern werden die Datenwörter D1 wieder aus dem Pufferspeicher P1 unter Verwendung einer Lesesteuer LS1 zyklisch ausgelesen, wobei nun auch das Prüfwort PW jeweils ausgelesen wird. Das Prüfwort PW und die Datenwörter D1 gelangen zum Schlüsselrechner SR1, der die verschlüsselten Datenwörter VD1 erzeugt und an die Übertragungseinheit UE1 abgibt.

Das Abrufen der verschlüsselten Datenwörter VD1 vom Schlüsselrechner SR1 erfolgt durch die Taktimpulse T1, die auch der Lesesteuerung LS1 und einer Steuereinheit ST1, die als Speichersteuerung und Taktsteuerung dient, zugeführt. Die Steuereinheit ST1 erzeugt aus den Taktimpulsen T1 die Taktimpulse T2 und gibt diese an das Endgerät E1 und die Schreibsteuerung SS1 ab. Zur Vermeidung eines Datenstaus blendet die Steuereinheit ST1 eine dem Auslesen des Prüfwortes PW entsprechende Anzahl von Taktimpulsen T1 aus.

Die Fig. 3 zeigt die während der Übertragung kontinuierlich auftretenden Taktimpulse T1 sowie die Taktimpulse T2. Es ist zu erkennen, daß während der Übertragung des Prüfwortes PW an das Endgerät E1 keine Taktimpulse T2 abgegeben werden. Die zeitliche Zuordnung zwischen den Taktimpulses T1 und T2 kann dabei verschoben sein, da zweckmäßigerweise das Einspeichern in den Pufferspeicher P1 dem Auslesen um zwei bis drei Datenwörter D1 voreilen kann. Die Steuereinheit ST1 legt dabei in an sich bekannter Weise fest, in welchen. Speicherbereich jeweils eingespeichert und aus welchem Speicherbereich jeweils ausgelesen wird.

Auf der Empfangsseite werden die verschlüsselten Datenwörter VD2 nach ihrem Empfang durch die Übertragungseinheit UE2 unter Steuerung durch die Taktimpulse T3 dem dortigen Schlüsselrechner SR2 als verschlüsselte Datenwörter VD3 zugeführt. Über eine Schreibsteuerung SS2, werden die verschlüsselten Datenwörter VD3 nach ihrer Entschlüsselung in die Speicherbereiche 0 bis 127 des Pufferspeichers P2 zyklisch eingespeichert. Die zyklische Reihenfolge ist dabei dieselbe wie beim Auslesen aus dem Pufferspeicher P1, so daß das Prüfwort PW jeweils in den Speicherbereich PO eingespeichert wird und die Datenwörter D2, in die Speicherbereiche B1 bis B127 eingespeichert werden. Unter Verwendung einer Lesesteuerung LS2 werden anschließend die Datenwörter D2 aus den Speicherbereichen B1 bis B127 ausgelesen und zum Endgerät E2 übertragen. Die Abgabe an das Endgerät E2 erfolgt dann unter Steuerung der Taktimpulse T4, die aus den Taktimpulsen T3 in ähnlicher Weise erzeugt werden wie die Taktimpulse T2 aus den Taktimpulsen T1, da das Prüfwort PW nicht durch die Lesesteuerung LS2 ausgelesen wird und es andernfalls zu einem Datenverlust kommen könnte.

Das Prüfwort PW, das sich jeweils im Speicherbereich BO befindet, wird durch eine Auswerteeinheit A auf seine Richtigkeit überprüft. Falls das Prüfwort PW nicht mit einem vereinbarten Prüfwort übereinstimmt, wird das durch die Auswerteeinheit A erkannt und ein neues Einphasen der Schlüsselgeräte wird veranlaßt.

Bei dem dargestellten Ausführungsbeispiel wird nach jeweils 127 Datenwörtern D1 ein Prüfwort PW eingefügt. Es ist selbstverständlich möglich, auch einen anderen Prüfzyklus zu verwenden und ihn gegebenenfalls auch in vereinbarter Weise zu variieren.

Das Ein- und/oder Ausspeichern der Datenwörter D1 und D2 sowie des Prüfworts PW kann seriell oder parallel erfolgen. Die Pufferspeicher P1 und P2 sind zweckmäßigerweise als Halbleiter-Schreib-Lese-Speicher (RAM-Speicher) ausgebildet. Es ist jedoch auch möglich, sie als Schieberegister mit seriellen oder parallelen Eingängen und seriellen oder parallelen Ausgängen auszubilden. Derartige Speicher sind beispielsweise unter der Bezeichnung FIFO-Speicher (first in - first out) allgemein bekannt.

**Ansprüche**

1. Verfahren zum Überwachen des Synchronlaufs von Schlüsselgeräten, bei dem ein Schlüsselgerät in einer sendenden Station mittels eines Endgerätes eingegebene Datenwörter verschlüsselt und über eine Übertragungseinheit aussendet, bei dem nach dem Empfang der verschlüsselten Datenwörter mittels einer weiteren Übertragungseinheit ein Schlüsselgerät in der empfangenden Station die verschlüsselten Datenwörter entschlüsselt und an ein wei-teres Endgerät die entschlüsselten Datenwör-ter abgibt, dadurch gekennzeichnet, daß in der sendenden Station die vom Endgerät (EI) abgegebenen Datenwörter (DI) zeitlich nach-einander in Speicherbereiche (BI bis BI27) ei-nes Pufferspeichers (PI) eingespeichert wer-den, daß aus dem Pufferspeicher (PI) ein dort in einem vorgegebenen Speicherbereich (B0) gespeichertes Prüfwort (PW) und die Daten-wörter (DI) ausgelesen, verschlüsselt und über-tragen werden, daß in der empfangenden Station nach der Entschlüsselung das Prüfwort (PW) in einen vorgegebenen Speicherbereich (B0) und die Datenwörter (D2) in weitere Spei-cherbereiche (BI bis BI27) eines empfangsseiti-gen Pufferspeichers (P2) eingespeichert wer-den, daß nur die Datenwörter (D2) aus dem Pufferspeicher (P2) ausgelesen und zum emp-fangsseitigen Endgerät (E2) abgegeben wer-den und daß das im vorgegebenen Speicherbereich (B0) gespeicherte Prüfwort (PW) in einer Auswerteeinheit (A) auf seine Richtigkeit überprüft wird, wobei das Einspeichern der Datenwörter (DI) und das Auslesen des Prüfwortes (PW) und der Datenwörter (DI) aus dem sendeseitigen Pufferspeicher (PI) und das Ein-speichern des Prüfwortes (PW) und der Daten-wörter (DI) und das Auslesen der Datenwörter (D2) aus dem empfangsseitigen Pufferspeicher (P2) zyklisch, und nicht nur im Anschluß an eine Startprozedur, erfolgt, wobei das Auslesen zeitlich verzögert gegenüber dem Einlesen erfolgt.

2. Verfahren nach Anspruch I, dadurch geken-nzeichnet, daß bei Unrichtigkeit des Prüfworts (PW) eine Neueinphasung der Schlüsselgeräte (SI, S2) veranlaßt wird.

3. Verfahren nach Anspruche 1 oder 2, dadurch gekennzeichnet, daß das Einspeichern und/oder Ausspeichern serielle erfolgt.

4. Verfahren nach Anspruche 1 oder 2, dadurch gekennzeichnet, daß das Einspeichern und/oder das Ausspeichern parallel erfolgt.

5. Verfahren nach einem der Ansprüche 1 bis 4, bei dem auf der Sendeseite und auf der Empfangsseite die Datenwörter und die verschlüsselten Datenwörter jeweils aufgrund von in der jeweiligen Übertragungseinheit erzeugten Takt-impulsen abgegeben werden, dadurch ge-kennzeichnet, daß auf der Sendeseite während einer dem Auslesen des Prüfworts (PW) aus dem Pufferspeicher (P1) entsprechenden Zeitdauer und auf der Empfangsseite während einer dem Einspeichern des Prüfworts (PW) in dem Pufferspeicher (P2) entsprechenden Zeitdauer die Abgabe der Taktimpulse (T2, T4) an das Endgerät (E1, E2) gesperrt wird.

6. Verfahren nach einem der Ansprüche 1 bis 6, dadurch gekennzeichnet, daß das Prüfwort (PW) während der Übertragung unverändert bleibt.

7. Anordnung zur Durchführung des Verfahrens nach Anspruch 1, dadurch gekennzeichnet, daß das sendeseitige Schlüsselgerät (S1) einen Pufferspeicher (P1) enthält, in dem das Prüfwort (PW) in einem vorgegebenen Speicherbereich (BO) gespeichert ist, bei dem die Datenwörter (D1) in die übrigen Speicherbereiche (B1 bis B167) zeitlich nacheinander einspeicherbar sind und aus dem Prüfwort (PW) und die Datenwörter (D1) zeitlich nacheinander auslesbar sind und daß das empfangsseitige Schlüsselgerät (S2) einen Pufferspeicher (P2) enthält, bei dem das Prüfwort (PW) in einen vorgegebenen Speicherbereich (BO) nicht nur im Anschluß an eine Startprozedur die Datenwörter (D2) in die übrigen Speicherbereiche (B1 bis B127) zeitlich nacheinander einspeicherbar sind und bei dem die Datenwörter (D2) zeitlich nacheinander auslesbar sind.

8. Anordnung nach Anspruch 7, dadurch geke-

**nnzeichnet,** daß das sendeseitige Schlüsselgerät (S1) und das empfangsseitige Schlüsselgerät (S2) jeweils eine Steuereinheit (ST1 bzw. ST2) enthält an der die von der jeweiligen Übertragungseinheit (UE1 bzw. UE2) abgegebenen Taktimpulse (T1 bzw. T3) anliegen und die Taktimpulse (T2) und Steuersignale für das zeitgerechte Einspeichern und Auslesen des Prüfworts (PW) und der Datenwörter (D1, D2) erzeugt.

9. Anordnung nach Anspruch 7 oder Anspruch 8, **dadurch gekennzeichnet,** daß an dem empfangsseitigen Pufferspeicher (P2) eine Auswerteeinheit (A) vorgesehen ist die die Richtigkeit des Prüfworts (PW) überprüft und bei einem fehlerhaften Prüfwort (PW) ein entsprechendes Signal abgibt.

## Claims

1. Method for monitoring the synchronization of cryptographic devices, in which a cryptographic device in a transmitting station encrypts data words entered by means of a terminal and sends them out via a transmission unit, in which method, after the reception of the encrypted data words, a cryptographic device in the receiving station decrypts the encrypted data words by means of a further transmission unit and delivers the decrypted data words to a further terminal, characterized in that in the transmitting station the data words (D1) delivered by the terminal (E1) are stored successively in time in storage areas (B1 to B127) of a buffer store (P1), in that from the buffer store (P1) a test word (PW) stored there in a predetermined storage area (B0) and the data words (D1) are read out, encrypted and transmitted, in that in the receiving station, after the decryption, the test word (PW) is stored in a predetermined storage area (BO) and the data words (D2) are stored in other storage areas (B1 to B127) of a buffer store (P2) at the receiving end, in that only the data words (D2) are read out of the buffer store (P2) and delivered to the terminal (E2) at the receiving end and in that the test word (PW) stored in the predetermined storage area (BO) is checked for its correctness in an evaluating unit (A), the storing-in of the data words (D1) and the reading-out of the test word (PW) and of the data words (D1) from the buffer store (P1) at the transmitting end and the storing-in of the test word (PW) and of the data words (D1) and the reading-out of the data words (D2) from the buffer store (P2) at the receiving end is effected cyclically and not only following a starting procedure, the reading-out occurring with a time delay compared with the reading-in.

2. Method according to Claim 1, characterized in that a new phasing-in of the cryptographic devices (S1, S2) is initiated in the case of incorrectness of the test word (PW).

3. Method according to Claim 1 or 2, characterized in that the storing-in and/or reading-out occurs serially.

4. Method according to Claim 1 or 2, characterized in that the storing-in and/or the reading-out occurs in parallel.

5. Method according to one of Claims 1 to 4, in which at the transmitting end and at the receiving end the data words and the encrypted data words are in each case delivered on the basis of clock pulses generated in the respective transmission unit, characterized in that the delivery of the clock pulses (T2, T4) to the terminal (E1, E2) is inhibited during a period of time corresponding to the reading-out of the test word (PW) from the buffer store (P1) at the transmitting end and during a period of time corresponding to the storing-in of the test word (PW) in the buffer store (P2) at the receiving end.

6. Method according to one of Claims 1 to 6, characterized in that the test word (PW) remains unchanged during the transmission.

7. Arrangement for carrying out the method according to Claim 1, characterized in that the cryptographic device (S1) at the transmitting end contains a buffer store (P1) in which the test word (PW) is stored in a predetermined storage area (B0), in which the data words (D1) can be stored successively in time in the remaining storage areas (B1 to B167) and from which the test word (PW) and the data words (D1) can be read out successively in time and in that the cryptographic device (S2) at the receiving end contains a buffer store (P2) in which the test word (PW) can be stored successively in time, not only following a starting procedure, in a predetermined storage area (B0) and the data words (D2) can be stored successively in time in the remaining storage areas (B1 to B127) and in which the data words (D2) can be read out successively in time.

8. Arrangement according to Claim 7, characterized in that the cryptographic device (S1) at the transmitting end and the cryptographic device (S2) at the receiving end in each case contains a control unit (ST1 and ST2, respectively), at which the clock pulses (T1 and T3, respectively) delivered by the respective transmission unit (UE1 and UE2, respectively) are present and which generates clock pulses (T2) and control signals for the storing-in and reading-out of the test word (PW) and of the data words (D1, D2) in the correct time.

9. Arrangement according to Claim 7 or Claim 8, characterized in that an evaluating unit (A), which checks the correctness of the test word (PW) and in the case of an erroneous test word (PW) delivers a corresponding signal, is provided at the buffer store (P2) at the receiving end.

**Revendications**

1. Procédé pour contrôler le synchronisme d'appareils de codage, selon lequel un appareil de codage situé dans un poste émetteur code des mots de données introduits, à l'aide d'un appareil terminal, et émet ces mots de données au moyen d'une unité de transmission, et selon lequel après la réception des mots de données codés à l'aide d'une autre unité de transmission, un appareil de codage situé dans le poste récepteur décode les mots de données codés et envoie les mots de données décodés à un autre appareil terminal, caractérisé en ce que dans le poste émetteur, les mots de données (D1) délivrés par l'appareil terminal (E1) sont mémorisés successivement dans le temps, dans des zones (B1 à B127) d'une mémoire tampon (P1), qu'un mot de contrôle (PW) mémorisé dans une zone de mémoire prédéterminée (B0) et les mots de données (D1) sont lus à partir de la mémoire tampon (P1) et sont codés et transmis, que dans le poste récepteur, après le décodage, le mot de contrôle (PW) est mémorisé dans une zone de mémoire prédéterminée (B0) et les mots de données (D2) sont mémorisés dans d'autres zones (B1 à B127) d'une mémoire tampon (P2) située sur le côté réception, que seuls les mots de données (D2) sont lus à partir de la mémoire tampon (P2) et sont envoyés à un appareil terminal (E2) situé sur le côté réception, et que le caractère correct du mot de contrôle (PW) mémorisé dans la zone prédéterminée de mémoire (B0) est contrôlé dans une unité d'évaluation (1), la mémorisation des mots de données (D1) et la lecture du mot de contrôle (PW) et des mots de données (D1) à partir de la mémoire tampon (P1) située sur le côté émission et la mémorisation du mot de contrôle (PW) et des mots de données (P1) et la lecture des mots de données (D2) à partir de la mémoire tampon (P2) située sur le côté réception étant exécutées cycliquement et pas uniquement à la suite d'une procédure de démarrage, la lecture s'effectuant d'une manière retardée dans le temps par rapport à la mémorisation.

2. Procédé suivant la revendication 1, caractérisé par le fait que, lorsque le mot de contrôle (PW) est incorrect, une nouvelle mise en phase des appareils de codage (S1,S2) est déclenchée.

3. Procédé suivant la revendication 1 ou 2, caractérisé par le fait que la mémorisation et/ou la lecture sont réalisées en série.

4. Procédé suivant la revendication 1 ou 2, caractérisé par le fait que la mémorisation et/ou la lecture sont réalisées en parallèle.

5. Procédé suivant l'une des revendications 1 à 4, selon lequel, sur le côté émission et sur le côté réception, les mots de données et les mots de données codés sont délivrés respectivement sur la base d'impulsions de cadence produites dans l'unité respective de transmission, caractérisé par le fait que, sur le côté émission, pendant une durée correspondant à la lecture du mot de contrôle (PW) à partir de la mémoire tampon (P1) et sur le côté réception, pendant une durée correspondant à la mémorisation du mot de contrôle (PW) dans la mémoire tampon (P2), l'envoi des impulsions de cadence (T2,T4) à l'appareil terminal (E1,E2) est bloquée.

6. Procédé suivant l'une des revendications 1 à 6, caractérisé par le fait que le mot de contrôle (PW) reste inchangé pendant la transmission.

7. Dispositif pour la mise en oeuvre du procédé suivant la revendication 1, caractérisé par le fait que l'appareil de codage (S1), situé du côté émission, contient une mémoire tampon (P1), dans laquelle le mot de contrôle (PW) est mémorisé dans une zone prédéterminée de mémoire (B0), dans laquelle les mots de données (D1) peuvent être mémorisés successivement dans le temps dans les autres zones de mémoire (B1 à B167) et à partir de laquelle un mot de contrôle (PW) et les mots de données (P1) peuvent être lus successivement dans le temps, et que l'appareil de codage (S2) présent sur le côté réception contient une mémoire tampon (P2), dans laquelle le mot de contrôle (PW) peut être mémorisé dans une zone prédéterminée de mémoire (B0), et ce pas seulement à la suite d'une procédure de démarrage, et que les mots de données (D2) peuvent être mémorisés successivement dans le temps dans les autres zones de mémoire B1 à B127, et à partir de laquelle les mots de données (D2) peuvent être lus successivement dans le temps.

8. Dispositif suivant la revendication 7, caractérisé par le fait que l'appareil de codage (S1) situé sur le côté émission et l'appareil de codage (S2) situé sur le côté réception contiennent chacun une unité de commande (ST1 ou ST2), à laquelle sont appliquées les impulsions de cadence (T1 ou T3) délivrées par l'unité de transmission (UE1 ou UE2) et qui produit des impulsions de cadence (T2) et des signaux de commande pour la mémorisation et la lecture, correctes dans le temps, du mot de contrôle (PW) et des mots de données (D1,D2).

9. Dispositif suivant la revendication 7 ou la revendication 8, caractérisé par le fait qu'à la mémoire tampon (P2) située du côté réception est raccordée une unité d'évaluation (A), qui contrôle le caractère correct du mot de contrôle (PW) et délivre un signal correspondant dans le cas où le mot de contrôle (PW) est erroné.

# FIG 1

# FIG 2

# FIG 3